Europäisches Patentamt

European Patent Office

Office européen des brevets

⑩ (11) Publication number: **0 042 364**
**B1**

(12) **EUROPEAN PATENT SPECIFICATION**

(45) Date of publication of patent specification: **24.10.84**

(21) Application number: **81830094.9**

(22) Date of filing: **05.06.81**

(51) Int. Cl.³: **F 02 D 31/00,** F 02 D 33/02

(54) **Method and apparatus for adjusting the idling speed rate of an internal combustion Otto cycle engine.**

(30) Priority: **16.06.80 IT 6793680**

(43) Date of publication of application:
**23.12.81 Bulletin 81/51**

(45) Publication of the grant of the patent:
**24.10.84 Bulletin 84/43**

(84) Designated Contracting States:
**DE FR GB SE**

(56) References cited:
**FR-A-2 439 874**
**FR-A-2 456 215**
**US-A-3 667 020**

(73) Proprietor: **FIAT AUTO S.p.A.**
**Corso Giovanni Agnelli 200**
**I-10135 Torino (IT)**

(72) Inventor: **Di Nunzio, Vittorio**
**Corso Francia 278**
**I - 10146 Torino (IT)**

(74) Representative: **Prato, Roberto et al**
**c/o Ingg. Carlo e Mario Torta Via Viotti 9**
**I-10121 Torino (IT)**

Courier Press, Leamington Spa, England.

## Description

The present invention relates to an electronic device for adjusting the idling speed rate (number of revolutions per minute) setting of internal combustion Otto cycle engines.

The device object of the present invention, though certainly general in use, has been specially studied to comply with the new anti-pollution laws for the State of California (U.S.A.). According to these laws the engine idling speed rate setting device must not be touched for 80.000 kilometers.

It is clear that with a setting adjusted in the factory and then sealed for 80.000 kilometers it is not possible to maintain the idling speed rate within a range acceptable for such a distance (break-in period, seasonal change thermal differences, etc.).

It is therefore necessary to utilize electronic devices with the engine revolution number (RPM) as feedback signal.

This device can indifferently operate on the air or on the mixture, when applied to systems with mixture strength correction based on an exhaust gas sensor (feedback systems). In fact, if the device is of a type acting on the air by-pass, the feedback sensor automatically corrects the mixture strength, so that it becomes rich or weak depending on the quantity of air added or subtracted by the device in order to maintain the speed rate at a specified level.

Instead, if the system works with open loop on the mixture, it is advisable the device to act on a component varying the air/fuel mixture introduced during the idle stage as in the case which will be described later, where the idle speed rate setting screw acts on a carburettor system.

An apparatus of this type is described in the US—A—3 667 020 which describes an idling speed control apparatus, wherein a predetermined idling speed and two RPM thresholds are defined (upper and lower limit), wherein the actual RPM is compared with the window between these thresholds and wherein, if the RPM is not in the window, a correction of the RPM takes place to bring the RPM into the window to the predetermined idling value by an actuation device. However, systems of this type are not satisfactory for the above mentioned new laws.

The object of the present invention is to provide a device of general use on systems with idling speed rate setting via idle speed rate setting screw or mixture by-pass or on systems which by-pass the inducted air, which are very accurate and with full reliability.

According to the invention it is provided a process for the adjustment of the idling speed rate of internal combustion Otto cycle engines for motor vehicles provided with:

— means indicating the throttle position;

— means indicating the motor vehicle is moving;

— means indicating the engine revolution speed rate;

— means indicating when the automatic gear selector lever is in position D, 1, 2, R and

— an electronic control unit

and of the type in which two RPM thresholds (second and third threshold) are defined, wherein the actual RPM is compared with the window between these thresholds and wherein, if the actual RPM is not in the window, a correction of the RPM takes place to bring the actual RPM into the window, acting on the device that varies the amount of the mixture supplied to the engine and characterized in that two other RPM thresholds are predetermined (first and fourth threshold), wherein the first threshold is lower than the second threshold and the fourth threshold is higher than the third threshold, and in that the above mentioned correction of the actual RPM takes place only if:

a. the mixture admitting throttle valve is checked to be shut, the signal indicating the throttle is shut being accepted with a pre-established time delay;

b. the motor vehicle is checked to be stationary;

c. the actual engine RPM is checked to be not lower than the lowest predetermined threshold (first threshold);

d. the actual engine RPM is checked to be not higher than the highest predetermined threshold (fourth threshold), the signal indicating the revving down of the RPM below the highest (fourth) threshold being accepted with a pre-established time delay.

Additionally the present invention comprises a device carrying out the above mentioned process including:

— first sensor means (5) for the throttle position arranged to provide at their output an electrical signal indicative that the throttle is opened;

— detector means (10) arranged to provide at their output an electrical signal indicative that the motor vehicle is moving;

— speed sensor means (18) arranged to provide at their output an electrical signal indicative of the revolution speed rate of the engine;

— second sensor means (25) arranged to provide at their output an electrical signal indicative the automatic gear selector lever is in position D, 1, 2, R;

— a mechanical device for air or mixture adjustment;

— a 12 V direct current electric motor actuating said mechanical device for air or mixture adjustment;

— an electronic control unit receiving at its input: the electrical signals from the first sensor means (5), detector means (10), speed sensor means (18), second sensor means (25), and providing as output the order for the electric motor to rotate in the direction required by the control system;

characterized in that it further includes:

a. first comparator means (28, 29, 30, 13) arranged to compare the signal indicative of the engine rotation speed rate with four RPM thresholds: Vs min, Vs 1, Vs 2, Vs max, where Vs min<Vs 1<Vs 2<Vs max;

b. second comparator means (22) arranged to provide at their output an electric signal when the variation of the engine rotation speed rate exceeds a fixed threshold, in order to make the electric motor to move continuously;

c. blocking means (8) cooperating with an oscillator (9) adapted to lock this oscillator when at its inputs arrive the signals Vs max, Vs min coming from the first comparator means (28, 13), from the first sensor means (5) and from the detector means (10) so as to lock the electric motor;

d. controlling means (15) adapted to supply the signals coming from the second comparator means (22) for the stepless electric motor rotation;

e. inverting means (16) for the inversion of the electric motor rotation according to the position of the actual RPM with respect to Vs 1 and Vs 2.

The invention will be further understood from the following description given by way of nonlimiting example with reference to the accompanying drawings in which:

Figure 1 represents, by plotting the RPM rates as abscissas and the steps of the step-by-step electric motor (which will be described later) as ordinates, the system correction made.

Figure 2 represents, by plotting the RPM rates as abscissas and V as ordinates, the trigger diagram of the setting thresholds.

Figure 3 represents, by plotting times as abscissas and the RPM rate as ordinates, the variation of the RPM rate when the engine suddenly accelerates/decelerates.

Figure 4 represents the device block diagram, according to the invention.

The automatic adjustment system of the engine idling speed rate comprises:

— an electronic control unit receiving at its input: the discharge signal from the ignition coil; the signal of closed-throttle contact; the signal indicating the motor vehicle is moving; the signal of gear box positioned in Drive 1, 2, R (automatic transmission versions) and providing as output the order for the electric motor to rotate in the direction required by the control system.

— A 12 V direct current electric motor with reducer (generally it is sufficient a reducer output speed of about 1 turn/sec.) controlled step-by-step by said control unit and with a sufficiently slow repetitiv to avoid instability.

— A mechanical device for air or mixture adjustment able to receive the rotary motion from the electric motor and to vary the internal combustion engine speed rate.

In case of motor vehicle with carburettor this device may be the speed rate adjusting screw itself duly modified for coupling to the electric motor.

The electric motor and the engine speed variation device may be coupled rigidly or flexibly (e.g. Bowden).

In this second case, permitting the location of the electric motor away from the most advantageous adjusting point, the coupling must be particularly accurate to avoid any dangerous torsional effect.

Another possible engine speed rate variation device for the injection system consists of an air by-pass valve with flow section variable by means of a screw.

Also in this case the electric motor/screw coupling may be rigid or flexible.

The system is completed by a certain number of signals often already present in the outfit. These signals are:

— contact on throttle (indicating that the throttle is closed, i.e. that the accelerator pedal is released);

— contact indicating the gearshift selector lever is on D, 1, 2, R (automatic transmission vehicles only) already present on standard versions to inhibit starting when shift lever is in any gear-engaged position;

— contact indicating the motor vehicle is in movement; long since normally provided on U.S. version cars to activate the catalyst replacement interval warning-system (switch activated under the action of the odometer rotor).

The function of these three contacts will be illustrated in the more detailed description of the system.

An electronic control unit, which will be described later, processes the signal coming from the spark coil and generates a tachometer signal, indicating the instantaneous engine revolution number per minute which is the system feedback.

The control is of "window" type, i.e. the adjustment system does not act as long as the speed rate remains within the window or it takes a corrective action by increasing or decreasing the speed rate as required whenever the RPM is not in the window.

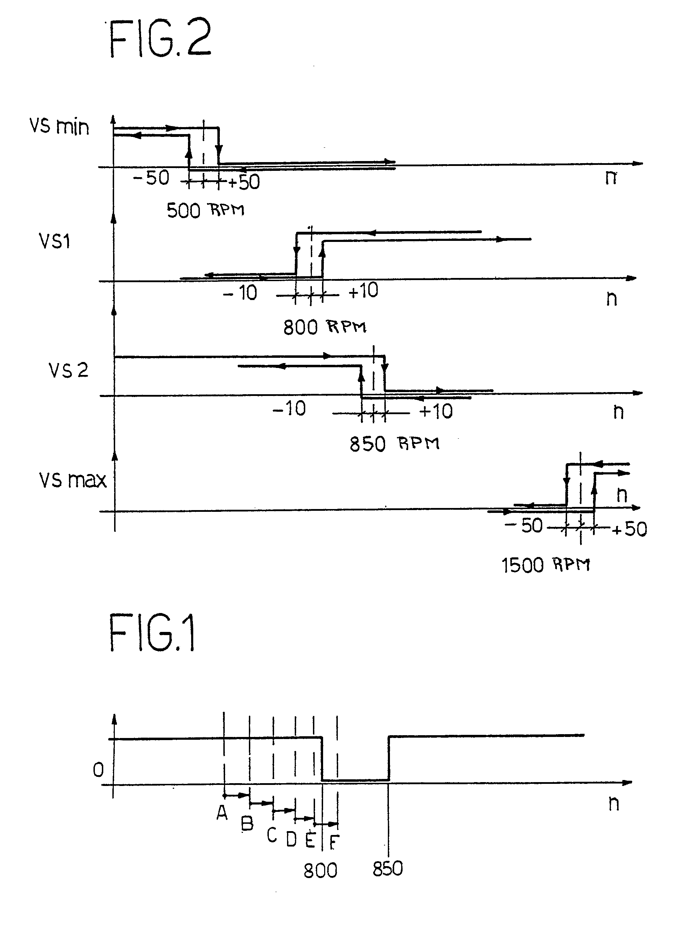

In Figure 1 it is schematically represented the way in which the system operates.

If at a certain instant the engine speed rate corresponds to point A and the conditions exist for the system to be operated in its adjustment mode (the series of conditions which are to be met will be described further on) the electric motor increases step-by-step the engine speed rate.

The system action is sufficiently slow to avoid any oscillations; the correction time, e.g. in the tested prototypes, is of about a step per second (every step corresponds to an average engine speed variation of 20 to 30 RPM).

A correction of about 200÷300 RPM is therefore operated in about 7÷10 seconds (7÷10 steps).

Still referring to Figure 1 the step-by-step system moves on of about 30 RPM to the position B, C up to F; being F positioned within the window, the system stops till the engine speed rate shifts again out of the window.

The above stated correction time, though slow, is satisfactory on the prototypes and avoids oscillations which arise very easily. In fact, an idling engine with open loop has slight speed rate flutterings, specially in devices with lambda sensor (a CO sensor) so that a more marked correction could cause oscillations.

To allow a correct system operation, four tachometric thresholds have been provided, whose stepping sequence diagram is shown in Figure 2.

The first threshold, Vs MIN, has been introduced to prevent the system from operating if the RPM is very low; particularly in absence of this inhibiting function the mere actuation (energising) of the ignition lock switch, without actually starting the engine, would already preset the control for revving up to the maximum rate possible.

Thresholds Vs1 and Vs2 limit the adjustment window and determine the normal operation of the system, as shown in Figure 1.

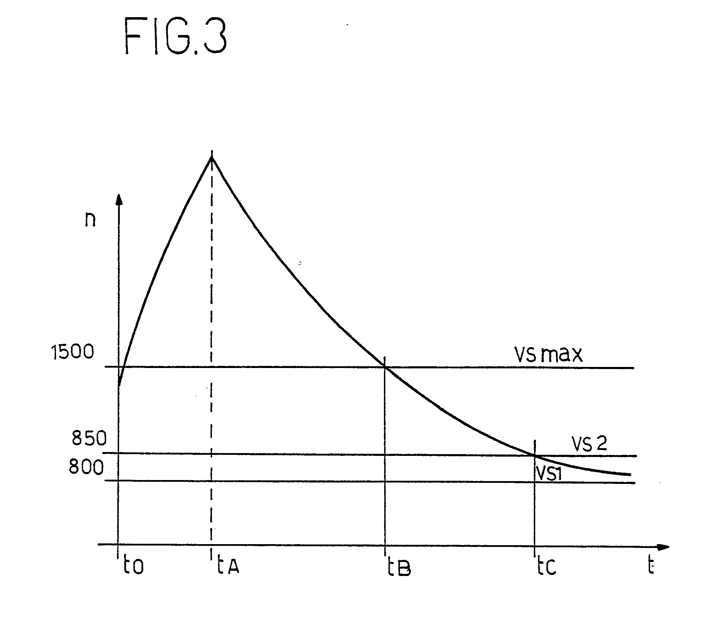

The threshold Vs MAX has been introduced to inhibit the system operation above a certain engine speed rate, surely corresponding to engine under load (in the present case about 1500 RPM). The need of such a threshold may be explained referring to Figure 3.

Supposing the engine idles with motor vehicle stationary and that it is accelerated as illustrated in the Figure 3, between instant tO and tA the accelerator pedal is actuated and the engine quickly accelerates, at instant tA the pedal is released; should not threshold Vs MAX avoid the control system to operate, starting from tA, a corrective action, tending to rev down the idle speed would take place, proportional to the time interval in which the engine speed is above Vs 2.

With engine idling and upon accelerating to 5.000÷6.000 RPM, such time may be of 5 or 6 seconds, so that the corrective action would last for such a time, with a consequent too low engine speed rate in the successive idle speed mode.

This would however not be too serious in case of only one acceleration or deceleration, as the system would restore the speed at the nominal value as soon as the tachometer signal falls below Vs 1.

In case of repeated accelerations and decelerations the adjustment system keeps reducing, gradually accumulating the effects of revving down to the lowest possible rate.

In this situation it is very likely that, leaving the engine with closed throttle, the adjustment control would not have sufficient time to make up for the previously activated speed rate reduction and the engine would stall.

From Figure 3 it can be also noted that the above described malfunction is not avoided simply introducing the threshold Vs MAX which inhibits beyond it the control system operation. In fact this would avoid the malfunction only in the interval tA—tB, while it would be still possible in the interval tB—tC.

For this reason the electronic module controlling the system is provided with delay control time at about 2 seconds after the instant at which passage below the Vs MAX threshold occurs and during which time the adjustment continues to be inhibited.

Furthermore, in the electronic module is provided a delay circuit controlled by the throttle position, which operates as follows: as soon as the throttle moves from the closure position, the idle speed control system is inhibited, but it does not operate instantaneously when the throttle is closed, but only after a delay of about 2 seconds.

This delay avoids the previously described malfunction as a result of slight accelerations in neutral (i.e. such as will not exceed Vs MAX) of a repetitive type.

In fact in this case the accelerations would be followed by decelerations at closed throttle with dwelling of the RPM above Vs 2 for about 0,4+0,7 seconds with a consequent order for a speed rate reduction.

The above said timing control avoids a cumulative speed reduction.

The electronic module takes the moving vehicle signal input; this signal is only a switch activated by the odometer rotor and is usually part of the U.S. version vehicle instrumentation as it is used for the catalyst replacement interval warning system.

This signal, duly processed, supplies a further inhibiting condition of the idle speed rate control system, corresponding to a vehicle speed of about 1 m/sec.

· If such inhibiting control were not provided, following malfunction could arise: assuming a gear is engaged and the accelerator pedal is released, the motor vehicle being in motion at low speed and RPM below Vs 1, the adjustment system would operate by way of increasing the RPM speed rate, but, a gear being engaged, this would lead to a vehicle speed increase which could be moderate if the road is slightly

climbing and the relative speed rate could therefore fail to fall within the control window.

It is possible that in particular situations the system could operate the max. speed rate increase, thus causing an excessive power at the road wheels, certainly not intentional on part of the driver.

The opposite effect would be on slight downgrades with gear engaged and vehicle moving.

If the engine speed is out of the window above threshold Vs 2, the system would reduce the RPM speed rate to the maximum possible limit, so that most likely the engine would falter and stop the moment the clutch were released.

In case of a motor vehicle with automatic transmission, there would be a malfunction on downgrades when the engine speed rate is above the window due to the "driving" effect of the torque converter, the automatic control could order a complete speed reduction with the engine turning off the moment the motor vehicle is suddenly braked (spike stops).

In motor vehicles with automatic transmission it has been verified that it is convenient, even if not essential, to reduce the window value of about 100 RPM when transmission is in D, 1, 2, R in order to avoid a rather notable "motoring over" of the motor vehicle.

For such a scope it has been utilized the existing contact system, avoiding the starting with the selector lever in any position other than N or P.

When transmission selector lever is in these positions, the contact is closed to earth, the signal reaches the electronic control unit and pre-sets the window to its nominal value, this being applicable to the basic version with manual transmission.

When the gearshift lever is in any other position, the contact is no more to earth and this pre-sets a reduction of about 100 RPM to said window value.

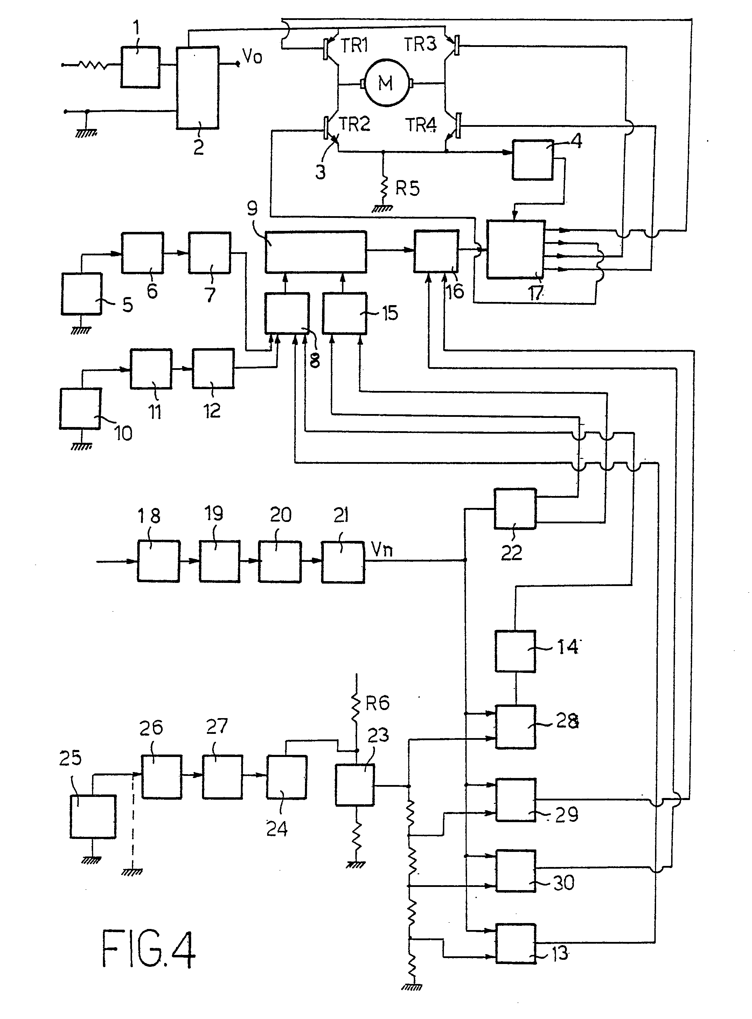

We are now going to describe in detail the electronic circuit according to the present invention, referring to Figure 4.

The battery voltage is applied, through diode 1 for protection against the polarity reversals, to block 2, which provides stabilized voltage supply VO to the integrated circuits and the thresholds.

The non-stabilized voltage output from block 2 upstream of the stabilizing section reaches block 3 which, through the four transistors TR1, TR2, TR3, TR4, controls the electric motor (indicated as M), previously mentioned, and establishes the rotation of its drive shaft in either directions.

If the transistors TR1 and TR4 are conducting, the electric motor M turns in one direction, while the conduction of transistors TR2 and TR3 causes rotation in the opposite direction.

If the two transistor couples are cut off, there is obviously no drive from the electric motor.

A resistor R5 is connected between the emitters of transistors TR2 and TR4 and the earth and such emitters are connected to block 4 limiting the current for motor M.

The voltage of resistor R5, which is directly proportional to the current flowing through the four transistors TR1, TR2, TR3, TR4, is applied to block 4, and controls the block, which will be described later, which controls the above mentioned four transistor set, reducing the extent of monitoring if the voltage drop at R5 should exceed a given value.

Block 4 has a double function: if, for any reason, transistor pair TR1 and TR2 (or TR3 and TR4) is conducting, what could cause a short circuit, block 4 would limit the current value to a non-dangerous level; furthermore, as the electric motor is controlled by pulses, the current must be limited at a fixed value, otherwise the electric motor could operate with different steps, varying with the battery voltage, thus influencing the adjustment speed rate.

The closed-throttle signal fed to block 5 is filtered and formed by block 6 and transmitted to a delay circuit 7 delaying of about 2 seconds the throttle closing signal which, after such a delay, reaches an inhibiting block 8 which "locks" the oscillator 9 when the throttle is opened.

The signal of motor vehicle in movement (drive contact from block 10) is filtered and converted from frequency into voltage by block 11 whose output reaches a threshold circuit 12, whose output reaches block 8, constituting a further inhibiting signal for oscillator 9, so that, if the vehicle road speed exceeds a determined speed (about 1 m/sec.), the oscillator will lock.

Furthermore the oscillator circuit 9 may be "locked" by the signals Vs MIN and Vs MAX, coming respectively from comparators 13 and 14 (described later); the first comparator 13 avoids the adjustment system to be activated when the engine speed is too low or the engine is inoperative, the second comparator 14 avoids the malfunction already described illustrating Figure 3.

The oscillator circuit 9 generates frequency pulses of about 1 Hz controlling the step-by-step electric motor operation. This control may be prevented when any blocking signal reaches circuit 8.

At oscillator circuit 9 arrives the signal coming from a continuous running block 15 when to it are transmitted logic signals of a convenient level coming from a derivator and threshold circuit, which will be described later.

The oscillator circuit 9 is connected to circuit 16 selecting the control signals for motor clockwise or anticlockwise rotation.

The selected control signals are supplied to a monitoring circuit 17 of the four transistors TR1, TR2, TR3, TR4.

The signal from the ignition coil arrives at a divider and filter circuit 18, whose output is fed to a trigger circuit 19, generating a rectangular pulse with the same frequency of the signal from the coil.

Circuit 19 is connected to a monostable circuit 20 whose output filtered by circuit 21 constitutes the voltage signal Vn directly proportional to the engine RPM.

This signal Vn is fed to the derivative circuit with threshold 22 processing the Vn signal and generates two logic signals if Vn increases or decreases at a rate exceeding the prefixed threshold; when this occurs the electric motor runs continuously and not step-by-step.

Circuit 22 actually determines a rapid correction in the presence of a sudden variation of the speed rate, which could occur when the air cooler is switched on or off or when shifting the gear selector lever from N to D in motor vehicles with automatic transmission.

Circuit 22 supplies two logic signals "a" and "b" to circuit 15 connected to oscillator 9 which, in this case, as already said, will cause the motor to run steplessly.

Circuit 23, consisting of an adjustable potentiometer associated with a resistive distribution network, allows fixing the tachometer thresholds at the desired value.

In the described embodiment, it has been preferred only one adjustment instead of four independent adjustments for saving reasons, considering that a greater precision is required for the window adjustment, while Vs MIN and Vs MAX may also be less accurate and therefore can be obtained after a convenient choice of the distribution network.

In the present case by means of the potentiometer 23 are fixed only thresholds Vs 1 and Vs 2; all remaining thresholds are consequently fixed at values depending upon the voltage divider, with an accuracy depending solely upon the precision of the voltage divider.

This value is correct for motor vehicles with manual transmission.

In case of motor vehicles with automatic transmission all thresholds decrease of about 100 RPM and this is obtained through circuit 24, which, by connecting in parallel to potentiometer circuit 23 the resistor R6, causes the above mentioned decrease.

Circuit 24 is monitored by the contact on gearshift lever 25 (for automatics) after filtering and forming (circuit 26) of the signal supplied by the contact; it has also been included a delay circuit 27 avoiding undesired corrections during abrupt shifts from N to D and vice versa.

For motor vehicles with manual transmission the cable transmitting the alternate current signal is directly connected to earth.

In case of motor vehicle with automatic transmission, when gearshift lever is in position N or P, the contact is closed and therefore the thresholds are the same as for the manual transmission; when the lever is in positions D, 1, 2, R the contact is open, and the circuit involved operates the above mentioned decrease.

Blocks 28, 29, 30, 13 are four comparators for the definition of the four tachometric thresholds utilized for the system control.

Circuit 28, representing the maximum threshold (Vs MAX) is connected to the delay circuit 14 that memorises the threshold for about 2 seconds after the downstepping takes place, as already explained.

**Claims**

1. A process for adjusting the idle speed rate setting of internal combustion Otto cycle engines on motor vehicles provided with:

— means indicating the throttle position;
— means indicating the motor vehicle is moving;
— means indicating the engine revolution speed rate;
— means indicating when the automatic gear selector lever is in position D, 1, 2, R and
— an electronic control unit

and of the type in which two RPM thresholds (second and third threshold) are defined, wherein the actual RPM is compared with the window between these thresholds and wherein, if the actual RPM is not in the window, a correction of the RPM takes place to bring the actual RPM into the window, acting on the device that varies the amount of the mixture supplied to the engine and characterized in that two other RPM thresholds are predetermined (first and fourth threshold), wherein the first threshold is lower than the second threshold and the fourth threshold is higher than the third threshold, and in that the above mentioned correction of the actual RPM takes place only if:

a. the mixture admitting throttle valve is checked to be shut, the signal indicating the throttle is shut being accepted with a pre-established time delay;
b. the motor vehicle is checked to be stationary;
c. the actual engine RPM is checked to be not lower than the lowest predetermined threshold (first threshold);
d. the actual engine RPM is checked to be not higher than the highest predetermined threshold (fourth threshold), the signal indicating the revving down of the RPM below the highest (fourth) threshold being accepted with a pre-established time delay.

2. A process according to Claim 1 characterized in that in motor vehicles with automatic transmission the system provides shifting of said second and third RPM threshold value to a prefixed lower speed rate by stepping down the RPM.

3. A process according to Claim 2 characterized in that the shifting of said window is dependent upon the automatic transmission gear selector lever position.

4. A process according to Claim 3 characterized in that the correction is made by means of a step-by-step electric motor adapted to act on devices capable of varying the amount of the fuel/air mixture.

5. A process according to Claim 4 characterized in that the monitoring frequency of the electric motor avoids engine speed rate oscillations (hunting).

6. A process according to Claim 5 characterized in that in case of sudden speed rate variation due to sudden load application or release the electric motor is controlled in stepless manner as a function of a derivative signal representing the engine speed rate variation.

7. Device carrying out the process according to any of Claims 1 to 6 including:

— first sensor means (5) for the throttle position arranged to provide at their output an electrical signal indicative that the throttle is opened;
— detector means (10) arranged to provide at their output an electrical signal indicative that the motor vehicle is moving;
— speed sensor means (18) arranged to provide at their output an electrical signal indicative of the revolution speed rate of the engine;
— second sensor means (25) arranged to provide at their output an electrical signal indicative the automatic gear selector lever is in position D, 1, 2, R;
— a mechanical device for air or mixture adjustment;
— a 12 V direct current electric motor actuating said mechanical device for air or mixture adjustment;
— an electronic control unit receiving at its input: the electrical signals from the first sensor means (5), detector means (10), speed sensor means (18), second sensor means (25) and providing as output the order for the electric motor to rotate in the direction required by the control system;

characterized in that it further includes:

a. first comparator means (28, 29, 30, 13) arranged to compare the signal indicative of the engine rotation speed with four RPM thresholds: Vs min, Vs 1, Vs 2, Vs max, where Vs min<Vs 1<Vs 2<Vs max;
b. second comparator means (22) arranged to provide at their output an electric signal when the variation of the engine rotation speed rate exceeds a fixed threshold, in order to make the electric motor to move continuously;
c. blocking means (8) cooperating with an oscillator (9) adapted to lock this oscillator when at its inputs arrive the signals Vs max, Vs min coming from the first comparator means (28, 13), from the first sensor means (5) and from the detector means (10) so to lock the electric motor;

d. controlling means (15) adapted to supply the signals coming from the second comparator means (22) for the stepless electric motor rotation;
e. inverting means (16) for the inversion of the electric motor rotation according to the position of the actual RPM with respect to Vs 1 and Vs 2.

8. A device according to claim 7 characterized in that it comprises a stabilizer (2) able to give a stabilized voltage to the control unit (3) controlling an electric motor M, the control unit (3) being connected to a monitoring circuit (17) causing the rotation of the electric motor in the opposite direction, in turn connected to a selector (16) able to select the rotation direction for the monitoring circuit (17) in dependence of the signals coming from an oscillator (9) consenting the selector (16) and from two threshold circuits (30) and (29) providing the thresholds Vs 1 and Vs 2; the oscillator (9) is connected to a block circuit (8) and to a stepless working circuit (15) causing the continuous rotation of the electric motor M in dependence of the signals coming from a threshold derivator circuit (22); a throttle contact sensor (5) connected to a delay circuit connected to said block circuit (8); a sensor (10), indicating that the motor vehicle is moving, connected to a threshold circuit (12) connected to said block circuit (8); a voltage divider filter 18) giving the actual RPM from a spark's number received from the ignition coil, said voltage divider filter (18) being connected to a monostable circuit (20) connected to a filter circuit (21) in turn connected to the threshold derivator circuit (22) connected to the stepless working circuit (15), the derivator circuit (22) varying the signal of the oscillator (9) in order to cause the continuous movement of the electric motor if the variation of the RPM is too high; two threshold comparators (13) and (28), the first connected to the block circuit (8) and the latter to a delay circuit (22) connected to the block circuit (8), the block circuit (8) blocking the oscillator (9) and consequently the idle adjusting if at its input is present one of the signals coming from blocks (5), (10), (28) and (13) indicating the throttle is open, the vehicle is moving, the RPM is <Vs min, the RPM is >Vs max.

**Revendications**

1. Procédé pour régler la vitesse de ralenti des moteurs à explosion monté sur des véhicules à moteur équipés de:

— moyens indiquant la position du papillon;
— moyens indiquant si le véhicule à moteur est en mouvement;
— moyens indiquant la vitesse de rotation du moteur;
— moyens indiquant si le levier sélecteur de vitesse automatique est dans la position D, 1, 2, R; et
— une unité de commande électronique,

et du type dans lequel deux seuils de vitesse de rotation (deuxième et troisième seuils) sont définis, dans lequel la vitesse de rotation réelle est comparée à la fenêtre définie entre ces seuils, et dans lequel, si la vitesse de rotation réelle n'est pas dans la fenêtre, une correction de cette vitesse de rotation s'effectue pour amener la vitesse de rotation réelle dans la fenêtre, en agissant sur le dispositif qui fait varier la quantité du mélange fourni au moteur, caractérisé en ce que deux autres seuils de vitesse de rotation sont prédéterminés (premier et quatrième seuils), le premier seuil étant inférieur au deuxième seuil et le quatrième seuil étant supérieur au troisième seuil, et en ce que la correction mentionnée ci-dessus de la vitesse de rotation réelle s'effectue seulement si:

a. le papillon d'admisssion du mélange est vérifié comme étant fermé, le signal indiquant que le papillon est fermé étant reçu avec un retard de temps préétabli;
b. le véhicule à moteur est vérifié comme étant immobile;
c. la vitesse de rotation réelle du moteur est vérifiée comme n'étant pas inférieure au seuil prédéterminé le plus bas (premier seuil);
d. la vitesse de rotation réelle du moteur es vérifiée comme n'étant pas supérieure au seuil prédéterminé le plus élevé (quatrième seuil), le signal indiquant la réduction de la vitesse de rotation en dessous du seuil le plus élevé (quatrième) étant reçu avec un retard de temps préétabli.

2. Procédé selon la revendication 1, caractérisé en ce que, dans le cas de véhicules à moteur équipés d'une transmission automatique, le système procure un décalage du deuxième et du troisième seuils de vitesse de rotation à une vitesse de rotation inférieure préfixée en ralentissant par paliers la vitesse de rotation.
3. Procédé selon la revendication 2, caractérisé en ce que le décalage de cette fenêtre dépend de la position du levier sélecteur de vitesse de la transmission automatique.
4. Procédé selon la revendication 3, caractérisé en ce que la correction est effectuée au moyen d'un moteur électrique pas à pas adapté pour agir sur des dispositifs pouvant faire varier la quantité du mélange combustible/air.
5. Procédé selon la revendication 4, caractérisé en ce que la fréquence de contrôle du moteur électrique évite des oscillations de la vitesse de rotation du moteur (poursuite).
6. Procédé selon la revendication 5, caractérisé en ce que, dans le cas de variations brutales de la vitesse de rotation, dues à l'application brutale d'une charge ou à sa suppression, le moteur électrique est commandé pas à pas en fonction d'un signal dérivé représentant la variation de la vitesse de rotation du moteur à explosion.

7. Dispositif pour mettre en oeuvre le procédé selon l'une quelconque des revendications 1 à 6, comportant:

— un premier capteur (5) pour la position du papillon agencé pour procurer à sa sortie un signal électrique indiquant que le papillon est ouvert;
— un détecteur (10) agencé pour procurer à sa sortie un signal électrique indiquant que le véhicule à moteur est en mouvement;
— un tachymètre (18) agencé pour procurer à sa sortie un signal électrique indiquant la vitesse de rotation du moteur à explosion;
— un deuxième capteur (25) agencé pour procurer à sa sortie un signal électrique indiquant si le levier sélecteur de vitesse de la transmission automatique est dans la position D, 1, 2, R;
— un dispositif mécanique pour le réglage de l'air ou du mélange;
— un moteur électrique à courant continu de 12 volts, actionnant le dispositif mécanique de reglage de l'air ou du mélange;
— une unité de commande électronique recevant à son entrée les signaux électriques provenant du premier capteur (5), du détecteur (10), du tachymètre (18), du deuxième capteur (25) et envoyant au moteur électrique l'ordre de tourner dans le sens exigé par le système de commande;

caractérisé en ce qu'il comporte en outre:

a. un premier comparateur (28, 29, 30, 13) agencé pour comparer le signal indiquant la vitesse de rotation du moteur aux quatre seuils de vitesse de rotation: Vs min, Vs 1, Vs 2, Vs max, où Vs min<Vs 1<Vs 2<Vs max;
b. un deuxième comparateur (22) agencé pour procurer à sa sortie un signal électrique lorsque la variation de la vitesse de rotation du moteur excède un seuil fixé afin de faire tourner en continu le moteur électrique;
c. des moyens de verrouillage (8) coopérant avec un oscillateur (9) adaptés pour verrouiller cet oscillateur lorsqu'arrivent à son entrée les signaux Vs max, Vs min, provenant du premier comparateur (28, 13), du premier capteur (5) et du détecteur (10) pour verrouiller le moteur électrique;
d. des moyens de commande (15) adaptés pour fournir les signaux en provenance du deuxième comparateur (22) pour la rotation continue du moteur électrique;
e. des moyens d'inversion (16) pour inverser le sens de rotation du moteur électrique en fonction de la position de la vitesse de rotation réelle par rapport aux seuils Vs 1 at Vs 2.

8. Dispositif selon la revendication 7, caractérisé en ce qu'il comporte un stabilisateur (2) pouvant fournir une tension stabilisée à l'unité de commande (3) commandant un moteur électrique (M), l'unité de commande (3) étant raccordée à un circuit de contrôle (17) provoquant la rotation du moteur électrique dans le sens opposé, à son tour raccordé à un sélecteur (16) pouvant sélectionner le sens de rotation pour le circuit de contrôle (17) en fonction des signaux provenant d'un oscillateur (9) contenant le sélecteur (16) et des deux circuits de seuil (30) et (29) procurant les seuils Vs 1 et Vs 2; en ce que l'oscillateur (9) est raccordé à un circuit bloc (8) et à un circuit de marche en continu (15) provoquant la rotation continue du moteur électrique (M) en fonction des signaux provenant d'un circuit dérivateur de seuil (22); un capteur à contact de papillon (5) raccordé à un circuit de retardement raccordé au circuit bloc (8); un détecteur (10) indiquant que le véhicule à moteur est en mouvement, raccordé à un circuit de seuil (12) raccordé au circuit block (8); un filtre diviseur de tension (18) donnant la vitesse de rotation réelle à partir d'un nombre d'etincelles reçues de la bobine d'allumage, ce filtre diviseur de tension (18) étant raccordé à un circuit monostable (20) raccordé à un circuit de filtre (21) raccordé à son tour au circuit dérivateur de seuil (22) raccordé au circuit de marche en continu (15), le circuit dérivateur (22) faisant varier le signal de l'oscillateur (9) afin de provoquer la rotation continue du moteur électrique si la variation de la vitesse de rotation du moteur à explosion est trop élevée; deux comparateurs de seuil (13 et 28), le premier raccordé au circuit block (8) et le deuxième raccordé à un circuit de retardement (22) raccordé au circuit bloc (8), le circuit block (8) verrouillant l'oscillateur (9) et par voie de conséquence le réglage de ralenti s'il est présent à son entrée l'un des signaux provenant des blocks (5), (10), (28) et (13) indiquant que le papillon est ouvert, que le véhicule est en mouvement, que la vitesse de rotation est inférieure à Vs min, ou que la vitesse de rotation est supérieure á Vs max.

**Patentansprüche**

1. Verfahren zum Regulieren der Leerlaufdrehzahleinstellung bei Ottomotoren mit interner Verbrennung für Kraftfahrzeuge mit:

— einer die Stellung der Drosselklappe angebenden Einrichtung;
— einer Einrichtung, welche anzeigt, daß das Kraftfahrzeug sich bewegt;
— einer die Drehzahl des Motors angebenden Einrichtung;
— einer Einrichtung, welche angibt, daß der Wahlhebel der Getriebeautomatik sich in den Stellungen D, 1, 2, R befindet, und
— einer elektronischen Steuerinheit;

und derjenigen Art, bei welchem zwei Drehzahlschwellwerte (zweiter und dritter Schwellwert) definiert werden, der Drehzahlistwert mit dem Fenster zwischen diesen Schwellwerten verglichen wird und eine Drehzahlkorrektur stattfindet, wenn der Drehzahlistwert nicht innerhalb des Fensters liegt, um den Drehzahlistwert in den Bereich innerhalb des Fensters zu bringen, in dem auf diejenige Vorrichtung eingewirkt wird, welche die Menge des Gemisches variiert, das dem Motor zugeführt wird, dadurch gekennzeichnet, daß zwei weitere Drehzahlschwellwerte vorbestimmt werden (erster und vierter Schwellwert), wobei der erste Schwellwert kleiner ist als der zweite Schwellwert und der vierte Schwellwert höher liegt als der dritte Schwellwert, und daß die obengenannte Korrektur des Drehzahlistwertes nur dann erfolgt, wenn:

a) eine Überprüfung ergibt, daß die Drosselklappe auf dem Gemischzuführungsweg geschlossen ist, wobei das Signal, welches anzeigt, daß die Drosselklappe geschlossen ist, mit einer vorbestimmten Verzögerungszeit angenommen wird;
b) eine Überprüfung ergibt, daß das Kraftfahrzeug stillsteht;
c) eine Überprüfung ergibt, daß der Drehzahlistwert nicht niedriger liegt als der unterste vorbestimmte Schwellwert (erster Schwellwert);
d) eine Überprüfung ergibt, daß der Drehzahlistwert nicht höher liegt als der höchste vorbestimmte Schwellwert (vierter Schwellwert), wobei das Signal, welches das Abfallen der Drehzahl unter den höchsten (vierten Schwellwert anzeigt, mit einer vorbestimmten Zeitverzögerung angenommen wird.

2. Verfahren nach Anspruch 1, dadurch gekennzeichnet, daß in Kraftfahrzeugen mit automatischem Getriebe das System eine Verschiebung des zweiten und des dritten Drehzahlschwellwertes zu einer zuvor festgelegten niedrigeren Drehzahl durch stufenweise Herabsetzung der Drehzahl vorsieht.

3. Verfahren nach Anspruch 2, dadurch gekennzeichnet, daß die Verschiebung des Fensters von der Wahlhebelstellung des automatischen Getriebes abhängt.

4. Verfahren nach Anspruch 3, dadurch gekennzeichnet, daß die Korrektur mittels eines elektrischen Schrittmotors durchgeführt wird, der geeignet ist zur Betätigung einer Vorrichtung, die imstande ist, die Menge des Brennstoff-Luft-Gemisches zu verändern.

5. Verfahren nach Anspruch 4, dadurch gekennzeichnet, daß die Überwachungsfrequenz des Elektromotors Schwingungen (ein Weglaufen) der Drehzahl verhindert.

6. Verfahren nach Anspruch 5, dadurch gekennzeichnet, daß im Falle von plötzlichen Drehzahlveränderungen, die auf plötzlicher Lastbeanspruchung oder -befreiung beruhen, der Elektromotor stufenlos gesteuert wird in Abhängigkeit von einem Ableitungssignal, welches die Änderung der Motordrehzahl darstellt.

7. Vorrichtung zur Durchführung des Verfahrens nach einem der Ansprüche 1 bis 6, enthaltend:

— eine erste Sensoreinrichtung (5) für die Stellung der Drosselklappe zur Erzeugung eines elektrischen Signals an ihrem Ausgang, welches anzeigt, daß die Drosselklappe geöffnet ist;

— eine Detektoreinrichtung (10), die zur Abgabe eines elektrischen Signals an ihrem Ausgang geeignet ist, welches angibt, daß sich das Kraftfahrzeug bewegt;

— eine Geschwindigkeitssensoreinrichtung (18), die an ihrem Ausgang ein elektrisches Signal abgibt, welches die Motordrehzahl angibt;

— eine zweite Sensoreinrichtung (25), die zum Abgeben eines elektrischen Signals an ihrem Ausgang ausgebildet ist, welches angibt, daß sich der Wahlhebel des Automatikgetriebes in der Stellung D, 1, 2 oder 3 befindet;

— eine mechanische Vorrichtung zur Regulierung der Luft oder des Gemisches;

— einen elektrischen 12 V-Gleichstrommotor, welcher die mechanische Vorrichtung zur Regulierung der Luft oder des Gemisches betätigt;

— eine elektronische Steuereinheit, die an ihrem Eingang empfängt: die elektrischen Signale von der ersten Sensoreinrichtung (5), der Detektoreinrichtung (10), der Geschwindigkeitssensoreinrichtung (18) der zweiten Sensoreinrichtung (25), und als Ausgangssignal den Befehl an den Elektromotor abgibt, in derjenigen Richtung zu drehen, die von dem Steuersystem gefordert wird;

dadurch gekennzeichnet, daß sie ferner enthält:

a) eine erste Komparatoreinrichtung (28, 29, 30, 13), welche derart ausgebildet ist, daß sie das die Motordrehzahl anzeigende Signal mit vier Drehzahlschwellwerten vergleicht: Vs min, Vs 1, Vs 2, Vs max, worin Vs min<Vs 1<Vs 2<Vs max;

b) eine zweite Komparatoreinrichtung (22), welche so ausgebildet ist, daß sie an ihrem Ausgang ein elektrisches Signal abgibt, wenn die Änderung der Motordrehzahl einen festen Schwellwert überschreitet, um eine kontinuierliche Bewegung des Elektromotors auszulösen;

c) eine Blockiereinrichtung (8), die mit einem Oszillator (9) zusammenwirkt und diesen Oszillator verriegeln kann, wenn an ihrem Eingang die Signale Vs max und Vs min aus der ersten Komparatoreinrichtung (28, 13), aus der ersten Sensoreinrichtung (5) und aus der Detektoreinrichtung (10) ankommen, um auf diese Weise den Elektromotor zu verriegeln;

d) eine Steuereinrichtung, die derart ausgebildet ist, daß sie die von der zweiten Komparatoreinrichtung (22) kommenden Signale zuführt, damit der Elektromotor stufenlos rotiert;

e) eine Invertereinrichtung (16) zur Umkehrung des Drehsinns des Elektromotors entsprechend der Lage des Drehzahlistwertes in bezug auf Vs 1 und Vs 2.

8. Vorrichtung nach Anspruch 7, dadurch gekennzeichnet, daß sie einen Stabilisator (2) zum Abgeben einer stabilisierten Spannung an die Steuerinheit (3) zur Steuerung eines Elektromotors M abgibt, wobei die Steuerinheit (3) an eine Überwachungsschaltung (17) angeschlossen ist, welche die Drehung des Elektromotors in der entgegengesetzten Richtung verursacht und ihrerseits an einen Wähler (16) angeschlossen ist, der zum Auswählen des Drehsinns für die Überwachungsschaltung (17) in Abhängigkeit von den Signalen geeignet ist, die von einem dem Wähler (16) zugeordneten Oszillator (9) und von zwei Schwellwertschaltungen (30) und (29) kommen, welche die Schwellwerte Vs 1 und Vs 2 liefern; wobei der Oszillator (9) mit einem Schaltungsblock (8) und einer stufenlos arbeitenden Schaltung (15) verbunden ist, welche die kontinuierliche Drehung des Elektromotors M in Abhängigkeit von den Signalen verursacht, die aus einer Schwellwert-Ableitungsschaltung (22) kommen; mit einem Drosselklappen-Kontaktsensor (5), der an eine mit dem Schaltungsblock (8) verbundene Verzögerungsschaltung angeschlossen ist; mit einem Sensor (10), welcher anzeigt, daß das Kraftfahrzeug fährt, und mit einer Schwellwertschaltung (12) verbunden ist, die an den Schaltungsblock (8) angeschlossen ist, mit einem Spannungsteiler-Filter (18), das den Drehzahlistwert aufgrund der Funkenzahl angibt, die von der Zündspule geliefert wird, wobei das Spannungsteiler-Filter (18) an eine monostabile Schaltung (20) angeschlossen ist, die mit einer Filterschaltung (21) verbunden ist, welche ihrerseits mit der Schwellwert-Ableitungsschaltung (22) verbunden ist, die an die stufenlos arbeitende Schaltung (15) angeschossen ist, wobei die Ableitungsschaltung (22) das Signal des Oszillators (9) verändert, um die kontinuierliche Bewegung des Elektromotors zu verursachen, wenn die Drehzahländerung zu groß ist; mit zwei Schwellwertkomparatoren (13) und (28), von denen der erste mit dem Schaltungsblock (8) und der zweite mit einer Verzögerungsschaltung (22) verbunden ist, welche mit dem Schaltungsblock (8) verbunden ist, wobei der Schaltungsblock (8) den Oszillator (9) und folglich die Leerlaufregulierung blockiert, wenn an seinem Eingang eines der Signale vorhanden ist, die von den Blökken (5), (10), (28) und (13) kommen und anzeigen, daß die Drosselklappe geöffnet ist, das Fahrzeug fährt, die Drehzahl kleiner als Vs min oder größer als Vs max ist.

# FIG.2

# FIG.1

# FIG.3

FIG.4